Europäisches Patentamt

European Patent Office

Office européen des brevets

(19)

(11) Numéro de publication: **0 329 636**
**A2**

## (12) DEMANDE DE BREVET EUROPEEN

(21) Numéro de dépôt: **89870023.2**

(22) Date de dépôt: **02.02.89**

(51) Int. Cl.⁴: **B 60 Q 1/48**

(30) Priorité: **17.02.88 BE 8800188**

(43) Date de publication de la demande:
**23.08.89 Bulletin 89/34**

(84) Etats contractants désignés:
**AT BE CH DE ES FR GB GR IT LI LU NL SE**

(71) Demandeur: **Sirjacobs, Michel**
**Rue Docteur J. Rondeau, 27A**
**B-6510 Morlanwelz (BE)**

(72) Inventeur: **Sirjacobs, Michel**
**Rue Docteur J. Rondeau, 27A**
**B-6510 Morlanwelz (BE)**

(54) **Signalisation d'une manoeuvre de parking en marche arr. ou av.**

(57) Feu(x) ou objet(s) lumineux ou non, multicolore(s) ou non, fixe(s) ou mobile(s), placé(s) à l'arrière, à l'intérieur ou à l'extérieur d'un véhicule pour indiquer ou signaler, en clignotant alternativement ou par intermittence, aux autres usagers de véhicules automobiles, l'intention d'une manoeuvre de parking en marche arrière ou avant. Invitant ces derniers à laisser le champ libre pour cette manoeuvre.

L'exemple illustré en pages 3. et 5. n'est qu'un modèle. Le principe de l'invention est de signaler de façon précise une manoeuvre de parking en marche arrière ou avant.

FiG 1

FiG 2

EP 0 329 636 A2

Bundesdruckerei Berlin

## Description

### Signalisation d'une manoeuvre de parking en marche arrière ou avant.

L'invention concerne n'importe quel (s) feu(x) ou objet(s) lumineux ou non, multicolore(s) ou non, fixe(s) ou mobile(s), placé(s) à l'arrière, à l'intérieur ou à l'extérieur, d'un véhicule pour indiquer ou signaler, en clignotant alternativement ou par intermittence, aux autres usagers de véhicules automobiles, l'intention d'une manoeuvre de parking en marche arrière ou avant. Invitant ces derniers à laisser le champ libre pour cette manoeuvre.

Un exemple du sigle "Parking" en marche arrière.

Sigle " P " PARKING, imprimé sur une matière transparente fond bleu ; couleur bleue officielle du panneau E.9.PARKING avec les autres signes et lettre " P " blancs.

Sigle placé devant la lampe du feu spécial PARKING. Voi schéma de ce feu en page 3.

LEGENDE

1 MASSE BATTERIE
2 BORNE POSITIVE
3 BOITE FUSIBLES
3A FUSIBLE 7 AMPERES
4 BOITE CLIGNOTANTE
5 BLOC RACCORD
6 FIL CIRCUIT FEUX DE DETRESSE
7 FIL FEU SPECIAL
8 CONTACTEUR DU FEU SPECIAL
9 TEMOIN LUMINEUX FEU SPECIAL
10 TEMOIN FEU DE DETRESSE
11 CONTACTEUR FEU DE DETRESSE
12 FEUX DE DETRESSE
13 FEU SPECIAL PARKING

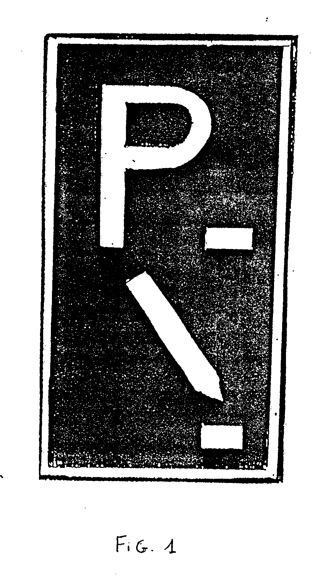

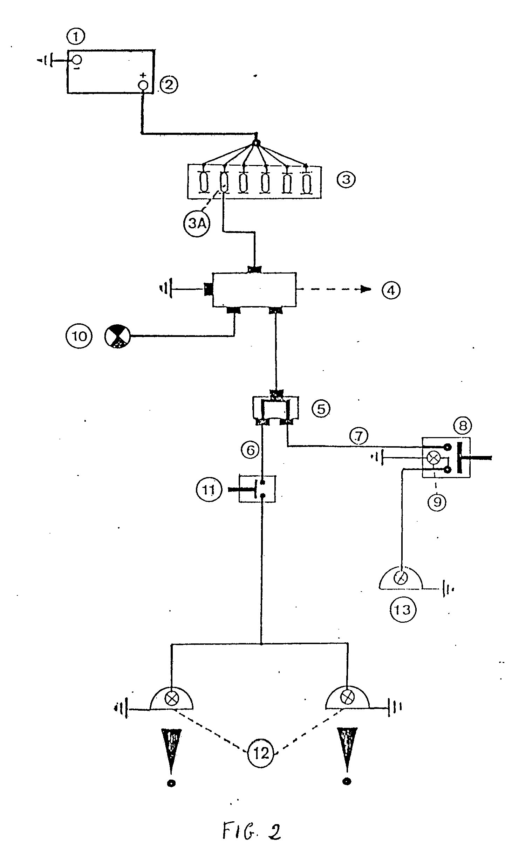

## Revendications

1. Le sigle décrit en page 2. et dessiné en page 3. est placé devant le ou les feux spéciaux "P" Parking ou le, ou les objets lumineux comme décrit dans le texte de l'invention en page 1.

Ce feu, ou ces feux peuvent fonctionner suivant l'exemple du schéma de la page 5. dont la légende se trouve en page 6.

Le schéma de la page 5. indique une façon économique de faire fonctionner le signal "P" Parking en marche arrière ou avant.

Le circuit spécial commence à partir du point (5) bloc raccord, profitant ainsi du circuit d'origine de (1) à (4) qui équipe tous les véhicules automobiles.

Un fil partira de la borne (5) vers l'entrée d'un interrupteur (8) avec témoin lumineux bleu (9), cet interrupteur sera relié à la masse.

La borne de sortie conduira le courant par un fil au feu spécial "P" Parking, également relié à la masse et le fera fonctionner quant l'automobiliste fermera le circuit en appuyant sur l'interrupteur (8).

Si on le désire, on pourra multiplier les circuits feux "P" Parking, à partir de la borne de sortie de l'interrupteur (8).

On pourra également faire une ligne entièrement indépendante, en partant de la batterie (1) et (2) vers le point (13), ou placer une commande à distance, sans fil, vers un boitier équipé de tout le circuit.

FiG. 1

EP 0 329 636 A2

FIG. 2